# EUROPÄISCHE PATENTSCHRIFT

(11) **EP 2 152 824 B1**
(45) Veröffentlichungstag und Bekanntmachung des Hinweises auf die Patenterteilung: **03.08.2016**
(21) Anmeldenummer: 08749237.7
(22) Anmeldetag: 30.04.2008
(51) Int. Cl.: C09D 175/16, C08G 18/08, C08G 18/10, C08G 18/12, C08G 18/42, C08G 18/67

(54) **WASSERBASIERENDE ZWEISCHICHT-BESCHICHTUNGSSYSTEME AUF URETHANBASIS, IHRE VERWENDUNG UND MIT IHNEN BESCHICHTETE SUBSTRATE**
WATER-BASED TWO-LAYER COATING SYSTEMS BASED ON URETHANE, THE USE THEREOF AND SUBSTRATES COATED WITH THEM
SYSTÈMES DE REVÊTEMENT BICOUCHE AQUEUX À BASE D'URÉTHANE, LEUR UTILISATION ET SUBSTRATS REVÊTUS AVEC CEUX-CI

(30) Priorität: 04.05.2007 DE 102007021013
(43) Veröffentlichungstag der Anmeldung: 17.02.2010
(73) Patentinhaber: BASF Coatings GmbH, 48165 Münster (DE)
(72) Erfinder: FICKERS, Anne, 48167 Münster (DE); RINK, Heinz-Peter, 48153 Münster (DE); DOPP, Andreas, 48308 Senden (DE)
(74) Vertreter: Leifert & Steffan
(86) Internationale Anmeldenummer: PCT/EP2008/003488
(87) Internationale Veröffentlichungsnummer: WO 2008/135210

(56) Entgegenhaltungen:
- EP-A- 1 702 954
- DE-A1- 10 308 103

## Beschreibung

Die Erfindung betrifft wasserbasierende Zweischicht-Beschichtungssysteme auf Urethanbasis, Wasserbasislacke und Wasserklarlacke zur Herstellung dieser Zweischichtbeschichtungssysteme, ihre Verwendung und mit ihnen beschichtete Substrate.

In der Automobilserienlackierung gehören aus einem Basislack und einem Klarlack bestehende Zweischicht-Beschichtungssysteme, die auch zusammen als Decklacke bezeichnet werden, zum Stand der Technik. Diese Beschichtungssysteme dienen dazu, die unter ihnen liegenden Schichten zu schützen und dem gesamten Lackaufbau die gewünschten optischen Eigenschaften und die erforderliche Wetterbeständigkeit zu verleihen. Basislacke enthalten farbgebende und/oder effektgebende Pigmente. Klarlacke schützen den Basislack und vertiefen seine optische Wirkung. Decklacke können lösemittelhaltig oder wässrig sein.

Wasserbasierende Zweischicht-Beschichtungssysteme auf Urethanbasis sind im Stand der Technik bekannt (BASF Handbuch Lackiertechnik, Vincentz Verlag, 2002, S. 98 - 99). Sie können auf wässrigen Polyurethandispersionen und auf Polyacrylat-Polyurethan-Hybrid-Harzen basieren (Winnacker, Küchler, Chemische Technik - Prozesse und Produkte, Band 7 - Industrieprodukte, Wiley VCH, 2004, S. 662 - 669).

Wässrige Polyurethandispersionen können dabei durch Emulgieren hydrophober Polyurethane in Wasser mit Hilfe externer Emulgatoren hergestellt werden. Möglich ist jedoch auch, Selbstdispergierbarkeit des Polyurethans durch den Einbau hydrophiler Gruppen zu ermöglichen. Die Wasserdispergierbarkeit kann dabei z.B. durch Carboxylatgruppen, die mit Aminen in anionische Gruppen überführt wurden (anionische Polyurethan-Dispersionen) erzielt werden. Möglich ist auch, Wasserdispergierbarkeit durch Reaktion von tertiären Aminoalkoholen mit Präpolymeren, die noch freie Isocyanatfunktionen enthalten, und nachfolgende Neutralisation mit Säure zur erzielen (kationische Polyurethane). Eine weitere Alternative ist die Modifizierung von Präpolymeren mit freien Isocyanatfunktionen mit wasserlöslichen langkettigen Polyethern (nichtionogene Polyurethane). Wässrige Dispersionen von Polyurethanen lassen sich nach verschiedenen Verfahren herstellen, die in Winnacker, Küchler, Chemische Technik - Prozesse und Produkte, Band 7 - Industrieprodukte, Wiley VCH, 2004 beschrieben werden. Bei diesen handelt es sich u.a. um das Acetonverfahren, das Präpolymermischverfahren und das Schmelzdispersionsverfahren.

Ziel des Einsatzes von Polyacrylat-Polyurethan-Hybrid-Harzen ist es, die positiven Eigenschaften der beiden eingesetzten Polymerarten zu verbinden und die negativen Eigenschaften zu minimieren. Sie werden vom Typ her unterschieden in Hybridsysteme, die durch reines Vermischen der verschiedenen Dispersionen erzeugt werden (Blends), in solche, bei denen zumindest zu einem gewissen Anteil eine chemische Verbindung zwischen den unterschiedlichen Polymerarten besteht, und in solche, in denen die unterschiedlichen Polymerklassen interpenetrierende Netzwerke (IPN) ausbilden.

Wässrige Beschichtungssysteme auf Basis der genannten Polyurethan-Polyacrylat-Hybriddispersionen sind in der Lackindustrie bereits bekannt und stark verbreitet. Üblicherweise werden die Polyurethan-Polyacrylat-Hybriddispersionen durch Emulsionspolymerisation eines Vinylpolymerisats ("Polyacrylat") in einer wässrigen Polyurethandispersion hergestellt. Es ist jedoch auch möglich, die Polyurethan-Polyacrylat-Hybriddispersionen als Sekundärdispersionen herzustellen.

Unter dem Begriff "Sekundärdispersionen" werden solche wässrigen Dispersionen verstanden, die zunächst im homogenen organischen Medium polymerisiert werden und danach unter Neutralisation im Allgemeinen ohne Zusatz externer Emulgatoren im wässrigen Medium umdispergiert werden.

WO-A 95/16004 beschreibt beispielsweise wasserverdünnbare Lackbindemittel auf Basis von Oligourethan-Acrylat-Copolymerisaten. Dabei wird eine Monomermischung aus vinylisch ungesättigten Monomeren in einem mit Wasser verdünnbaren organischen Lösungsmittel und in Gegenwart eines wasserlöslichen Oligourethans mit einer Molekularmasse von 750 bis 1000 radikalisch polymerisiert. Diese Sekundärdispersion wird dann zur Formulierung von Einbrennlacken eingesetzt.

In der DE-A 40 10 176 werden oxidativ trocknende Lacke offenbart, wobei als Bindemittel ein Polymer eingesetzt wird, welches dadurch erhältlich ist, dass in einem organischen Lösemittel ethylenisch ungesättigte Monomere in Gegenwart eines Polyurethanharzes, das polymerisierbare Doppelbindungen enthält, polymerisiert werden.

In der EP-A 657 483 werden wässrige Zweikomponenten-Überzugsmassen, bestehend aus einer Polyisocyanat-Komponente und einer wässrigen PolyurethanDispersion als Polyolkomponente beschrieben. Die Polyolkomponente wird dabei durch Neutralisation und Dispergierung von mit Säuregruppen hydrophilierten, laterale und/oder terminale Vinylgruppen enthaltenden, ungesättigten Polyurethan-Makromeren hergestellt. Anschliessend werden diese PUR-Makromere, gegebenenfalls nach Zugabe weiterer vinylischer Monomere, in wässriger Phase radikalisch polymerisiert.

Schließlich offenbart die EP-A 742 239 Zweikomponenten-Beschichtungssysteme, basierend auf Polyisocyanat-Vernetzern und wässrigen hydroxyterminierten Polyurethanpräpolymer/Acryl-Hybriden. Diese Hybridpolymere werden erhalten, indem ein wasserdispergierbares NCO-funktionelles Urethan-Präpolymer mit mindestens einem hydroxyfunktionellen Acrylatmonomer und einem Alkanolamin zu einem hydroxyfunktionellen Urethan-Präpolymer/Monomer-Gemisch umgesetzt und in Wasser dispergiert wird. Dieser Dispersion wird dann ein radikalischer Initiator und ein Hydroxygruppen enthaltender Kettenverlängerer zugesetzt und anschließend werden durch Erwärmen der wässrigen Reaktionsmischung sowohl die radikalische Polymerisation der Acrylatmonomere als auch der Kettenverlängerungsschritt des Polyurethans durchgeführt und vervollständigt. Die so erhaltenen hydroxyfunktionellen Polyurethanpräpolymer/Acryl-Hybrid-Dispersionen können dann durch Einrühren hydrophilierter Polyisocyanate zu den gebrauchsfertigen Zweikomponenten-Beschichtungsmitteln formuliert werden. Nachteilig ist hier der Einsatz von bis zu 6 % Molekulargewichtsregler bezogen auf Acrylatmonomer (z.B. Thiole), die wichtige Lackeigenschaften wie Beständigkeitseigenschaften und Filmhärte negativ beeinflussen können. Polyurethan-Polyacrylat-Hybrid-Sekundärdispersionen, die sich zur Herstellung von Zweikomponenten(2K)-Beschichtungsmitteln eignen, werden in der DE-A 103 08 103 offenbart. Die dort beschriebenen Polyurethan-Polyacrylat-Hybrid-Dispersionen werden hergestellt aus einem Polyurethan mit einem Molekulargewicht Mₙ von 1100 bis 10000 und einem oder mehreren vinylisch ungesättigten Monomeren, die in homogener, nichtwässriger Phase radikalisch polymerisiert werden, zumindest zum Teil neutralisiert werden und in wässriger Phase dispergiert werden. Sie eignen sich für verschiedene Einsatzgebiete.

Diese Zweikomponenten-Beschichtungsmittel zeigen als Zweischicht-BeschichtungsSysteme jedoch insbesondere auf Kunststoffsubstraten keine ausreichende Haftung: Auf Kunststoffsubstraten, die ohne Haftvermittler direkt mit dem Beschichtungssystem als Wasserbasislack beschichtet werden, zeigt sich keine ausreichende Direkthaftung. Auch die Haftung der Beschichtungssysteme als Wasserbasislacke auf mit Haftungsvermittlern beschichteten Kunststoffsubstraten genügt nicht den Anforderungen. Weiterhin quellen auf diesem System basierende Wasserbasislacke nach Aufbau mit einem wasserbasierenden Klarlack auf, wie sich u. a. nach einem 100-stündigen Tauchtest bei 40 °C zeigt. Außerdem zeigen sie bzw. ihre Wasserklarlacke nicht das auf Kunststoffsubstraten gewünschte kombinierte Eigenschaftsprofil einer hohen Flexibilität bei gleichzeitig guter Waschbürstenbeständigkeit und guter Chemikalienresistenz.

Aufgabe der Erfindung ist es deswegen, einen Wasserklarlack zur Herstellung eines wasserbasierenden Zweischichtbeschichtungssystems auf Urethanbasis bereitzustellen, der den üblichen an Beschichtungssysteme gestellten Anforderungen, insbesondere den Anforderungen an den Glanz (durch einen Glanzwert von größer als 85) und an die Haze-Bildung genügt. Außerdem soll ein Wasserklarlack zur Herstellung eines wasserbasierenden Zweischichtbeschichtungssystems auf Urethanbasis bereitgestellt werden, der auf Kunststoffen ein kombiniertes Eigenschaftsprofil mit hoher Flexibilität bei gleichzeitig guter Waschbürstenbeständigkeit und guter Chemikalienresistenz aufweist.

Eine weitere Aufgabe der Erfindung ist es, einen Wasserbasislack zur Herstellung eines wasserbasierenden Zweischichtbeschichtungssystems auf Urethanbasis bereitzustellen, der auf allen Substraten, insbesondere Kunststoffsubstraten, eine gute Haftung mit oder ohne Haftvermittler zeigt. Weiterhin ist es eine bevorzugte Aufgabe der Erfindung, einen entsprechenden Wasserbasislack bereitzustellen, der nach dem Aufbau mit einem wasserbasierenden Klarlack nur gering anquillt.

Weiterhin soll ein wasserbasierendes Zweischicht-Beschichtungssystem auf Urethanbasis bereitgestellt werden, das sowohl die an den Wasserklarlack als auch die an den Wasserbasislack gefüllten Anforderungen erfüllt. Auch soll das bereitgestellte Zweischichtbeschichtungssystem gut verarbeitbar sein, d.h. insbesondere eine hohe Ringleitungsstabilität aufweisen.

Die Erfindung stellt einen Wasserklarlack zur Herstellung eines wasserbasierenden Zweischicht-Beschichtungssystems auf Urethanbasis bereit, der mindestens eine Polyacrylat-Sekundärdispersion mit einer Glasübergangstemperatur des Polyacrylats T_{g} ≥ 20°C gemessen über Differential Scanning Calorimetry (DSC) und mindestens eine Polyacrylat-Polyurethan-Hybriddispersion mit einem Gewichtsverhältnis des Polyacrylatanteils der Sekundärdispersion zum Polyacrylat-Polyurethan-Anteil der Hybriddispersion von 1:1 bis 4:1, bevorzugt 2:1 bis 3:1, besonders bevorzugt 2,25:1 bis 2,75:1 und als Härter mindestens ein aminosulfonsaures, niedrigviskoses Polyisocyanat umfasst.

Die erfindungsgemäßen Wasserklarlacke zeigen eine hohe Flexibilität bei gleichzeitig guter Waschbürstenbeständigkeit und guter Chemikalienresistenz. Weiterhin erfüllen die erfindungsgemäßem Wasserklarlacke zur Herstellung wasserbasierender Zweischichtbeschichtungssysteme die Anforderungen an Glanz und niedrige Haze-Bildung.

Die Polyacrylat-Sekundärdispersion weist bevorzugt einen OH-Anteil von 2,5 bis 4,5 Gew.-% bezogen auf die Festkörperanteile auf. Weiter bevorzugt weist sie eine Glasübergangstemperatur des Polyacrylats von 20 bis 70°C gemessen über DSC auf. Noch weiter bevorzugt weist die Polyacrylat-Sekundärdispersion eine Viskosität von ca. 200 bis ca. 2500 mPas bei 23°C gemessen nach DIN EN ISO 3219/A.3 auf. Bevorzugte Handelsprodukte sind Bayhydrol XP 2469, Bayhydrol A 145 und Bayhydrol XP 2470 der Bayer Material Science. Besonders bevorzugt ist Bayhydrol XP 2470, das einen OH-Anteil von 3,9 Gew.-%, eine Viskosität von ca. 2000 mPas bei 23°C gemessen nach DIN EN ISO 3219/A.3 und eine Glasübergangstemperatur T_{g} von 50°C (gemessen über DSC) aufweist.

Die Polyacrylat-Polyurethan-Hybriddispersion kann über eine Polyurethanvorstufe, die über Umsetzung mindestens eines Diisocyanats mit mindestens einem linearen Polyester und nachfolgende Blockierung der Präpolymere mit Diethanolamin herstellbar ist, hergestellt werden. Bevorzugt wird das Diisocyanat TMXDI eingesetzt. Der lineare Polyester basiert bevorzugt auf Dimerfettsäure und/oder Isophthalsäure als Säurekomponente sowie Neopentylglykol und/oder Hexandiol als Alkoholkomponente. Diese Vorstufe kann dann zur Herstellung der Hybriddispersion in organischer Phase vorgelegt werden. In Gegenwart dieser Polyurethanvorstufe wird dann in einer Stufe oder in mehreren aufeinander folgenden Stufen (Meth)Acrylsäure und/oder (Meth)Acrylat mit vinylisch ungesättigten Verbindungen polymerisiert. Im Falle einer mehrstufigen Polymerisation kann dabei die Reaktionsführung über eine stufenweise erfolgende Zugabe einzelner Verbindungen bzw. Verbindungsklassen und/oder eine stufenweise erfolgende Zugabe von Gemischen mindestens zweier Verbindungsklassen erfolgen. In einer bevorzugten mehrstufigen Reaktionsführung wird Styrol, Butylacrylat, Hydroxyethylacrylat und Cyclohexylmethacrylat polymerisiert und dabei in mindestens einer Stufe mit Acrylsäure umgesetzt. Nach erfolgter Polymerisation wird neutralisiert und das Prozeßlösemittel entfernt. Der Feststoffgehalt beträgt Gew.-35 %.

Das aminosulfonsaure, niedrigviskose Polyisocyanat kann ein Polyisocyanat auf HMDI- oder IPDI-Basis sein. Bevorzugt handelt es sich bei dem aminosulfonsauren Polyisocyanat um ein Polyisocyanat auf HMDI-Basis. Das aminosulfonsaure, niedrigviskose Polyisocyanat weist bevorzugt eine Viskosität zwischen 2000 und 8000 mPas bei 23°C gemessen nach DIN EN ISO 3219/A.3 Weiter bevorzugt weist es einen NCO-Gehalt von 17,0 - 25,0 Gew.-% auf. Noch weiter bevorzugt beträgt seine NCO-Funktionalität F 2,5 bis 3,8. Entsprechende Handelsprodukte sind zum Beispiel Bayhydur XP 2487/1 und Bayhydur XP 2570 der Bayer Material Science. Besonders bevorzugt wird das als Bayhydur XP 2570 im Handel erhältliche aminosulfonsaure HMDI-Trimer mit einer Viskosität von 3500 mPas bei 23°C gemessen nach DIN EN ISO 3219/A.3 einem NCO-Gehalt von 20,5 Gew.-% und einer NCO-Funktionalität F = 3,0 eingesetzt.

Der Klarlack des Zweischichtbeschichtungssystems kann weiterhin ein hydrophobes niedrigviskoses Polyisocyanat als Härter aufweisen, das eine schnellere Aushärtung und Erniedrigung der Viskosität des Härters bewirkt. Zudem wid die Wasserempfindlichkeit der ausgehärteten Beschichtungen gesenkt. Bevorzugt weist dieses niedrigviskose Polyisocyanat eine Viskosität von kleiner als 1500 mPas gemessen bei 23°C nach nach DIN EN ISO 3219/A.3 auf. Bevorzugt werden zu diesem Zweck HDI-Trimere eingesetzt. Beispiele für derartige hydrophobe Polyisocyanate sind Desmodur N 3600 und Desmodur XP 2410 der Bayer Material Science, die einen NCO-Gehalt von 23,0 bzw. 24,0 Gew.-%, eine Viskosität von 1200 bzw. 700 mPas bei 23°C gemessen nach DIN EN ISO 3219/A.3 eine NCO-Funktionalität F von 3,2 bzw. 3,1 und ein Äquivalentgewicht von 180 bzw. 175 aufweisen. Besonders bevorzugt wird als hydrophobes niedrigviskoses Polyisocyanat Desmodur XP 2410 eingesetzt.

Der Klarlack des erfindungsgemäßen Zweischichtbeschichtungssystems kann neben den genannten Bestandteilen mindestens ein Additiv wie z.B. ein Netz- und Dispergiermittel, einen Haftvermittler, einen Korrosionsinhibitor, ein Verlaufsmittel, einen Entschäumer, ein Biozid, ein Lichtschutzmittel, ein Wachs, Bariumsulfat mit einer Partikelgrößer kleiner 25 nm, ein Mattierungsmittel und/oder ein Verdickungsmittel aufweisen.

Eine gute Haftung zwischen Klarlack und Wasserbasislack sowie eine gute Haftung zum Untergrund (direkt zum Kunststoffsubstrat oder zu einem mit einer kathodischen Tauchlackierung beschichteten Substrat) zeigen Wasserbasislacke zur Herstellung von wasserbasierenden Zweischicht-Beschichtungssystemen der vorgenannten Art, die mindestens eine Polyurethandispersion, mindestens eine Polyacrylat-Polyurethan-Hybriddispersion der bereits beschriebenen Art und mindestens ein Melaminharz umfassen. Diese Wasserbasislacke quellen auch unter den erfindungsgemäß eingesetzten Klarlacken nur wenig bis nicht an und sind gut verarbeitbar. Insbesondere weisen sie die gewünschte Ringleitungsstabilität auf. Das Gewichtsverhältnis des Polyurethanbindemittelanteils der mindestens einen Polyurethandispersion zum Polyacrylat-Polyurethan-Hybrid-Bindemittelanteil der mindestens einen Polyacrylat-Polyurethan-Hybriddispersion des Wasserbasislacks beträgt bevorzugt 3:1 bis 5,5:1, weiter bevorzugt 4:1 bis 4,5:1.

Die in dem Wasserbasislack eingesetzte Polyurethandispersion ist aus UV-stabilen Di- oder Polyisocyanaten, Polyethern und/oder Polyestern mit Molmassen Mₙ zwischen 600 und 2000 und niedermolekularen Diolen und/oder Ethanolaminen herstellbar. Als niedermolekulare Diole und/oder Ethanolamine werden in diesem Kontext Verbindungen mit einem Molmassenbereich von 62 bis 600 verstanden. Als Diisocyanate werden bevorzugt Hexamethylendiisocyanat, Tetramethylxylylendiisocyanat, 1,3-Isocyanatomethylcyclohexan, Isophorondiisocyanat und Bis-(para-Isocyanatocyclohexyl)methan eingesetzt. Es können auch Gemische der genannten Verbindungen oder entsprechende Oligomere, wie z.B. Isocyanurate, Allophanate und Uretdione, eingesetzt werden. Besonders bevorzugt ist das als Handelsprodukt Desmodur W erhältliche monomere Bis-(para-Isocyanatocyclohexyl)methan, das eine Viskosität nach DIN EN ISO 3219/A.3 von ca. 30 mPas bei 25°C und einen NCO-Gehalt von 31,8 Gew.-% aufweist sowie Isophorondiisocyanat. Als Polyester werden bevorzugt Verbindungen auf Basis von Dimerfettsäure und/oder Isophthalsäure als Säurekomponente und Hexandiol, Neopentylglykol und/oder Dimethylolpropionsäure als hydroxyfunktionelle Komponente eingesetzt. Die nachfolgende Kettenverlängerung des Präpolymers wird bevorzugt mit Trimethylolpropan durchgeführt. Die Polyurethandispersion kann nach Neutralisation, Dispergierung und Entfernung des Prozesslösemittels erhalten werden. Als Polyether werden bevorzugt niedermolekulare Polyethylenglykole oder Polybutylenglykole mit Molekulargewichten von ca. 200 bis 1000 eingesetzt.

Die im Wasserbasislack eingesetzte mindestens eine Polyacrylat-Polyurethan-Hybriddispersion der bereits beschriebenen Art ist vorzugsweise identisch mit der im Wasserklarlack eingesetzten.

Das Gewichtsverhältnis des Bindemittelanteils des im Wasserbasislack eingesetzten mindestens einen Melaminharzes zur Summe der Gewichtsanteile der mindestens einen Polyurethandispersion und der mindestens einen Polyacrylat-Polyurethan-Hybriddispersion beträgt vorzugsweise zwischen 1:2 und 1:8, besonders bevorzugt 1:3 bis 1:4.

Als Melaminharz wird bevorzugt ein alkoxyalkyliertes Melaminharz wie das methoxymethylierte und butoxymethylierte im Handel erhältliche Cymel 1133 verwendet, um gute Wasserfestigkeiten, Flexibilitäten und Lagerstabilitäten zu erreichen.

Zweischichtbeschichtungssysteme, die über Kombination eines Wasserklarlacks der zuvor beschriebenen Art mit einem Wasserbasislack der zuvor beschriebenen Art herstellbar sind, erfüllen die an den Wasserklarlack und den Wasserbasislack gestellten Anforderungen und sind gut verarbeitbar. Insbesondere weisen sie eine gute Ringleitungsstabilität auf.

Bestandteil der Erfindung ist auch die Verwendung des erfindungsgemäßen Zweischicht-Beschichtungssystems zur Beschichtung von Substraten sowie diese beschichteten Substrate selbst. Zur Beschichtung wird ein vorbehandeltes oder nicht vorbehandeltes Substrat mindestens einseitig mit dem Wasserbasislack beschichtet, getrocknet, mit dem Wasserklarlack beschichtet und wieder getrocknet. Die Trocknung nach der Auftragung der ersten Schicht erfolgt bevorzugt nach einer mehrminütigen Zwischentrocknung über eine Zeitdauer von 3 bis 15 Minuten bei Temperaturen von 40 bis 100°C. Der zweite Trocknungsschritt nach Applikation des Wasserklarlacks erfolgt bevorzugt nach einem Ablüften über einen Zeitraum von 30 Minuten bis einer Stunde bei einer Temperatur von kleiner als 120°C, bevorzugt 60 bis 100° über einen Zeitraum von 10 bis 30 Minuten. Bevorzugte Schichtdicken der einzelnen Schichten der getrockneten Zweischichtbeschichtung betragen ca. 10 bis 25 µm für die Wasserbasislackschicht und 30 bis 60 µm für die Wasserklarlackschicht.

Bei den beschichteten Substraten kann es sich um SMC, PA/PPO, PU/RIM, PC-PBT, GFK, PPO, PP/EPDM handeln. Bevorzugt werden die im Automobil- und Nutzfahrzeugbereich gängigen Substrate mit dem erfindungsgemäßen Zweischicht-Beschichtungssystem beschichtet. Besonders bevorzugt handelt es sich bei den beanspruchten beschichteten Substraten um Kunststoffsubstrate aus dem Automobil- und Nutzfahrzeugbereich.

### Beispiele:

### Erfindungsgemäße Polyurethandispersionen 1 für die Wasserbasislacke

### Herstellung eines Polyesterpolyols A für die erfindungsgemäße Polyurethandispersion I

In einem für Polykondensationreaktionen geeigneten Stahlreaktor wurden 4634 g Pripol 1012 (Dimerfettsäure der Fa Unichema), 2577 g 1,6-Hexandiol, 1372g Isophthalsäure und 110 g Xylol als Schleppmittel eingewogen und auf 150°C aufgeheizt. Die Temperatur des Gemisches wurde so gesteigert (maximal 220°C), dass die Kolonnenkopftemperatur 125°C nicht überstieg. Ab einer Säurezahl von 5 wurde auf Abdestillieren und auf eine Säurezahl von 3.5 gefahren.
Anschließend wird der Polyester in Methylethylketon auf einen FK von 73% angelöst.

### Herstellung der erfindungsgemäßen Polyurethandispersion I

1434 g der Polyesterharzlösung A wurden zusammen mit 384 g Methylethylketon, 85 g Dimethylolpropansäure, 14 g Neopentylglykol, und 392 g Isophorondiisocyanat bis zu einem konstanten Isocyanatgehalt erhitzt. Anschließend wurden bezogen auf eine Gehalt von 1.1% NCO 38 g Trimethylolpropan zugegeben. In einem Viskositätsbereich von 10 - 14 dPas (1:1 gemessen in N-Methylpyrrolidon) wurde durch die Zugabe von 40 g n-Butanol eine weitere Reaktion unterbunden. Nach 60 min Rühren bei 82°C wurden 43 g Dimethylethanolamin zugegeben. Nach 30 min Rühren bei 82°C wurden dann 170 g Butylglykol zugesetzt und weiter 30 min bei 82°C gerührt. Hiernach gab man 3550 g Wasser unter Rühren zu. Durch Destillieren bei ca. 70°C unter Vakuum wurde das Methylethylketon bis zu einem Restgehalt von kleiner 0,5% entfernt. Abschließend wurde mit deionisiertem Wasser ein Festkörpergehalt (1 h 130°C) von 27.% eingestellt. Der pH-Wert betrug 7.7. Das Material ist homogen und stippen- und fädenfrei.

### Erfindungsgemäße Polyacrylat-Polyurethan-Hybridpolymer I für Klarlacke u. Wasserbasislacke

Herstellung eines Polyesterpolyols zur Herstellung einer Polyurethanharzlösung In einem für Polykondensationreaktionen geeigneten Stahlreaktor wurden 728,3 g Pripol 1012 (Dimerfettsäure der Fa Unichema), 239,2 g 1,6-Hexandiol, 294,4 g Isophthalsäure und 204,8 g Neopentylglykol sowie 180 g Xylol als Schleppmittel eingewogen und auf 150°C aufgeheizt. Die Temperatur des Gemisches wurde so gesteigert (maximal 220°C), dass die Kolonnenkopftemperatur 125°C nicht überstieg. Ab einer Säurezahl von 5 wurde auf Abdestillieren und auf eine Säurezahl von 3.5 gefahren. Anschließend wird der Polyester in Methylethylketon auf einen FK von 73% angelöst.

### Herstellung einer Polyurethanharzlösung zur Herstellung des Polyacrylat-Polyurethan-Hybridpolymers

In einem für die Herstellung von Polyurethanharzen geeigneten Stahlreaktor mit Rückflusskühler wurden 2351,2 g der zuvor beschriebenen Polyesterharzlösung, 107,3 g Neopentylglykol, 692,5 g TMXDI und 01,75 g Dibutylzinndilaurat vorgelegt und auf 80 bis 90°C erhitzt. Nach Erreichen eines konstanten NCO-Gehaltes wurden 47,7 g N,N-Diethanolamin zugegeben. Nach beendeter Reaktion wurde mit Butylglykol auf einen Feststoffgehalt von 60% angelöst.

### Herstellung des Polyacylat-Polyurethan-Hybridpolymers I

In einem für die Polymerisation geeigneten Stahlreaktor mit Rückflusskühler wurden 1355,6 g der zuvor beschriebenen organischen Polyurethanharzlösung und 759,8 g Butylglykol vorgelegt und auf ca. 110°C aufgeheizt In diese Vorlage werden unter Beibehalt der Temperatur innerhalb von 5 h eine Mischung von 679,2 g Styrol, 1824,8 g Butylacrylat, 775 g Cyclohexylacrylat und 1225,4 g Hydroxyethylacrylat sowie eine Mischung aus 580 g Butylglykol und 495,4 g tert-Butyl peroxy -2-ethylhexanoat innerhalb von 5,5 h gleichmäßig zudosiert. Nach einer weiteren Stunde wurden gleichzeitig beginnend eine Mischung aus 363,6 g Butylacrylat, 135,6 g Styrol, 154,4 g Cyclohexylacrylat, 245,0 g Hydroxyethylacrylat und 299,8 g Acrylsäure in 1 h und eine Mischung aus 552 g Butylglykol und 107,8 g tert-butyl-peroxy-2-ethylhexanoat innerhalb von 1,5 Stunden gleichmäßig zudosiert. Nachdem keine signifikante Festkörpererhöhung mehr eintrat, wurde auf 120°C aufgeheizt und unter Vakuum so lange gestrippt, bis ein Restmonomerengehalt kleiner 0,3% und eine Viskosität (10 zu 6 in Butylglykol) von ca. 5 bis 5.8 dPas erreicht worden war. Nach Abkühlen auf ca. 90°C wurden 224,8 g N,N-Diethylethanolamin zugegeben und mit deionisiertem Wasser verdünnt und ein Feststoffgehalt von 35% eingestellt. Der pH-Wert der Dispersion betrug 7,4.

### Beispiel:

### Zusammensetzungen:

**2K-Wasserklarlack:**

| | | | |
|---|---|---|---|
| 1. Komponente: | Polyacrylat- | Bayhydrol XP 2470 | 52,80 Gew.-Teile |
| | Sekundärdispersion, | | |
| | 45 Gew.-% | | |
| | Polyacrylat- | | 26,80 Gew.-Teile |
| | Polyurethan- | | |
| | Hybridpolymer I | | |
| | 35Gew.-% | | |
| | Wasser | | 10,00 Gew.-Teile |
| | Butylglykol | | 1,66 Gew.-Teile |
| | Polyester | K-Flex 188 | 5,70 Gew.-Teile |
| | Verschiedene | | 5,24 Gew.-Teile |
| | Additive | | |
| | | | 102,20 Gew.-Teile |
| | | | |
| 2. Komponente: | Hydrophiliertes HDI-Polyisocyanat | Bayhydur XP 2570 | 38,00 Gew.-Teile |
| | Aliphatisches HDI-Polyisocyanat | Desmodur XP 2410 | 33,00 Gew.-Teile |
| | Butylglykolacetat | | 29,00 Gew.-Teile |
| | | | 100,00 Gew.-Teile |

Mischungsverhältnis Stammkomponente: Härter im eingesetzten Lack:
100:43 nach Gewicht

**Wasserbasislack:**

| | | |
|---|---|---|
| Wasser | | 38,59 Gew.-% |
| Polyurethandispersion I, 27 Gew.-% | | 30,30 Gew.-% |
| Polyacrylat-Polyurethan-Hybridpolymer I, | | 5,50 Gew.-% |
| 35 Gew.-% | | |
| Cymel 1133 | Melaminharz | 2,80 Gew.-% |
| Pigmentpastenanteil | | 8,80 Gew.-% |
| Weitere Bestandteile | | 14.01 Gew.-% |
| | | 100,00 Gew.-% |

### Herstellung eines beschichteten Substrates:

Ein mit einer kathodischen Tauchlackierung (Cathoguard 500, BASF Coatings AG) und einem Füller (2840-20, Glasurit GmbH) vorbehandeltes metallisches Substrat wird pneumatisch mit dem Wasserbasislack beschichtet. Nach fünfminütigem Flash-Off wird bei 80°C 10 Minuten lang getrocknet. Die so erzielte Schichtdicke beträgt zwischen 12 und 20 µm.

Anschließend wird der Wasserklarlack pneumatisch aufgetragen. Nach vierzigminütigem Ablüften erfolgt eine zwanzigminütige Trocknung bei 80°C. Die erzielten Schichtdicken betragen 40 bis 50 µm.

Die so erhaltenen Beschichtungen weisen die folgenden charakteristischen Eigenschaften auf:

**Optischer Eindruck:**

| | |
|---|---|
| Kocherfrei, Glanz 20° | 92 E |
| Iw | 1,9 |
| sw | 16 |
| Distinction of Image | 82 |

**Chemikalienbeständigkeit:**

| Chemie EN ISO 2812-1, Verfahren 2 | | | | | GME 60409, Schwefelsr. 38%, 48 h RT |
|---|---|---|---|---|---|
| Test-substanz | Belastungsdauer und - temperatur | Oberflächen ver. DIN 53230 sofort | Oberflächen ver. DIN 53230 nach 1 h | Oberflächen ver. DIN 53230 nach 24 h | Oberflächenveränderung sofort |
| - | - | - | - | - | 8 |
| Diesel | 24 h RT | 0 | 0 | 0 | |
| Ethylenglykol 50% | 24 h RT | 0 | 0 | 0 | |
| Isopropanol 50% | 24 h RT | 2 | 2 | 1 | |

### Mechanische Werte:

**Haftungsprüfungen**

| Aufbauten | BL | KI | | | |
|---|---|---|---|---|---|
| 5 | LY4506-99-E | LY4669-23-A | | | |
| | | | | | |
| | **GT** | **Steinschl.** | **Impact** | **Glanz** | **Quell.** |
| | **ISO 2409** | **STD 234 (Fa. Scania)** | **ISO 6272-1** | **ISO 2813** | |
| Ohne Belastung (50° ü.N. gealtert) | 0 | 1,5 | i.O. | 90 | |
| 96h Wasserl. + 1h RT (nach ISO 2812-2, 96h bei 40°C) | 0 | 1,5 | | | 2 |
| 4h -25°C-Lagerung | 0 | 1,5 | i.O. | | |

**AMTEC (DIN 55668, 10 Cyclen)**

| | |
|---|---|
| Anfangsglanz 20° | 92 |
| Glanz 20°, ohne Reinigung | 33 |
| Glanz 20°, mit Reinigung | 68 |
| Reflow-Zeit [min] | 120 |
| Reflow-Temperatur [°C] | 80 |
| Glanz 20°, Reflow, nicht gereinigte Seite | 39 |
| Glanz 20°, Reflow, gereinigte Seite | 80 |

| **Testergebnisse für Zweischicht-Beschichtungssystem-beschichtete Plastiksubstrate Physikalische Tests** | | | | | | | |
|---|---|---|---|---|---|---|---|
| **Testergebnisse** | | | | | | | |
| Substrate | Originalherstellerteile, Industriestandard | SMC | PA /PPO | PU /RIM | PC-PBT | GFK | PPO |
| Filmstärke | Fabrikstandard DIN VDA | 70-80 µm | 70-80 µm | 70-80 µm | 70-80 µm | 70-80 µm | 70-80 µm |
| Physikalische Eigenschaften | | | | | | | |
| Pendelhärte (König) (DIN 53 157/ ISO 1552-1973) | > 50-100 s | 80 s | 50 s | 115 s | 80 s | 100 s | 100 s |
| Erichsentiefung (DIN 53 156) | > 4 mm | 6-9 mm | 6-9 mm | 6-8 mm | 8 mm | 6-8 mm | 6-8 mm |
| Dornbiegeprüfung (zylindrisch) (DIN 53 152/ ISO 1519-1973) | 2,5 cm | <2,5 cm | <2,5 cm | <2,5 cm | <2,5 cm | <2,5 cm | <2,5 cm |
| Dornbiegeprüfung (konisch) (DIN ISO 6860) | 2 cm | 0 cm | 0 cm | 0 cm | 0 cm | 0 cm | 0 cm |
| Gitterschnittprüfung (mehrfache Schnitte) (DIN 53 151/ ISO 2409-1972) | < 1 | 0-1 | 1 | 1 | 0 | 1 | 1 |
| Steinschlagprüfung (VDA 621 415) | 1,5-3 | 1 | 1,5 | 1 | 1-2 | 1,5 | 1,5 |

| **Testergebnisse für Zweischicht-Beschichtungssystem-beschichtete Plastiksubstrate Feuchtigkeits-/Bewitterungstests** | | | | | | |
|---|---|---|---|---|---|---|
| Testergebnisse | | | | | | |
| Substrate | | SMC | PU/RIM | GFK | SMC | PU/RIM |
| Filmstärke | Fabrikstandard DIN VDA | 70-80 µm | 70-80 µm | 70-80 µm | 70-80 µm | 70-80 µm |
| Bewitterungstests | | | | | | |
| | **Wassersprüh-Test (BASF Standard) - 360 h** | | | | | |
| Blasengrad (DIN 53209 ASTM D714-56) | 0 | 0 | 0 | 0 | 0 | 0 |
| Gitterschnittprüfung (DIN 53 151 ISO 2409-1972) | 0-2 | 0-1 | 0-1 | 0-1 | 0-1 | 1 |
| | **Kondenswasser-Klimabewitterungstest DIN 50 017 ASTM D 2247-68 - 480 h** | | | | | |
| Blasengrad (DIN 53209 ASTM D714-56) | 0 | 0 | 0 | 0 | 0 | 0 |
| Gitterschnittprüfung (DIN 53 151 ISO 2409-1972) | 0-2 | 0-1 | 1 | 1 | 0-1 | 1 |

## Patentansprüche

1. Wasserklarlack zur Herstellung eines wasserbasierenden Zweischicht-Beschichtungssystems auf Urethanbasis,
**dadurch gekennzeichnet,**
**dass** er
- mindestens eine Polyacrylat-Sekundärdispersion mit einer Glasübergangstemperatur des Polyacrylats T_{g} ≥ 20°C und
- mindestens eine Polyacrylat-Polyurethan-Hybrid-Dispersion
- mit einem Gewichtsverhältnis des Polyacrylatanteils der Sekundärdispersion zum Polyacrylat-Polyurethan-Anteil der Hybriddispersion von 1:1 bis 4:1, bevorzugt 2:1 bis 3:1, besonders bevorzugt 2,25:1 bis 2,75:1 und
- als Härter mindestens ein aminosulfonsaures, niedrigviskoses Polyisocyanat umfasst.

2. Wasserklarlack nach Anspruch 1, **dadurch gekennzeichnet, dass** die Polyacrylat-Sekundärdispersion einen OH-Anteil von 2,5 bis 4,5 Gew.-% bezogen auf die Festkörperanteile aufweist.

3. Wasserklarlack nach Anspruch 1 oder 2, **dadurch gekennzeichnet, dass** die Polyacrylat-Sekundärdispersion eine Glasübergangstemperatur des Polyacrylats T_{g} von 20 bis 70°C aufweist.

4. Wasserklarlack nach einem der Ansprüche 1 bis 3, **dadurch gekennzeichnet, dass** die Polyacrylat-Sekundärdispersion eine Viskosität von 200 bis 2500 mPas bei 23°C aufweist.

5. Wasserklarlack nach einem der vorhergehenden Ansprüche, **dadurch gekennzeichnet, dass** die Polyacrylat-Polyurethan-Hybriddispersion über
- Vorlage einer über Umsetzung mindestens eines Diisocyanats mit mindestens einem linearen Polyester und nachfolgende Blockierung der Präpolymere mit Diethanolamin herstellbaren Polyurethanvorstufe in organischer Phase,
- ein- oder mehrstufige Polymerisation von (Meth)Acrylsäure und/oder (Meth)Acrylat mit vinylisch ungesättigten Verbindungen in Gegenwart der Polyurethanvorstufe und
- Neutralisation und Entfernung des Prozeßlösemittels herstellbar ist.

6. Wasserklarlack nach einem der vorhergehenden Ansprüche, **dadurch gekennzeichnet, dass** er als Härter weiterhin ein hydrophobes, niedrigviskoses Polyisocyanat umfasst.

7. Wasserbasislack zur Herstellung eines wasserbasierenden Zweischicht-Beschichtungssystems, **dadurch gekennzeichnet, dass** er mindestens eine Polyurethandispersion, mindestens eine Polyacrylat-Polyurethan-Hybrid-dispersion und mindestens ein Melaminharz umfasst.

8. Wasserbasislack nach Anspruch 7, **dadurch gekennzeichnet, dass** das Gewichtsverhältnis des Polyurethanbindemittelanteils der mindestens einen Polyurethandispersion zum Polyacrylat-Polyurethan-Hybrid-Bindemittelanteil der mindestens einen Polyacrylat-Polyurethan-Hybriddispersion des Wasserbasislacks 3:1 bis 5,5:1, bevorzugt 4:1 bis 4,5:1 beträgt.

9. Wasserbasislack nach Anspruch 7 oder 8, **dadurch gekennzeichnet, dass** die mindestens eine Polyurethandispersion aus
- UV-stabilen Di- bzw. Polyisocyanaten,
- Polyethern und/oder Polyestern mit Molmassen Mₙ zwischen 600 und 2000
- und niedermolekularen Diolen und/oder Ethanolaminen herstellbar ist.

10. Wasserbasislack nach einem der Ansprüche 7 bis 9, **dadurch gekennzeichnet, dass** die mindestens eine Polyacrylat-Polyurethan-Hybriddispersion über
- Vorlage einer über Umsetzung mindestens eines Diisocyanats und mindestens eines linearen Polyesters und nachfolgende Blockierung der Präpolymere mit Diethanolamin herstellbaren Polyurethanvorstufe in organischer Phase,
- ein- oder mehrstufige Polymerisation von (Meth)Acrylsäure und/oder (Meth)Acrylat mit vinylisch ungesättigten Verbindungen in Gegenwart der Polyurethanvorstufe und
- Neutralisation und Entfernung des Prozeßlösemittels herstellbar ist.

11. Wasserbasislack nach einem der Ansprüche 7 bis 10, **dadurch gekennzeichnet, dass** das Gewichtsverhältnis des Bindemittels des mindestens einen Melaminharzes bezogen auf die Summe der Gewichtsanteile der Bindemittel der mindestens einen Polyurethandispersion und der mindestens einen Polyacrylat-Polyurethan-Hybriddispersion zwischen 1:2 und 1:8, bevorzugt 1:3 bis 1:4 beträgt.

12. Wasserbasierendes Zweischicht-Beschichtungssystem auf Urethanbasis umfassend einen Wasserklarlack nach einem der Ansprüche 1 bis 6 und einen Wasserbasislack nach einem der Ansprüche 7 bis 11.

13. Wasserbasierendes Zweischicht-Beschichtungssystem nach Anspruch 12, **dadurch gekennzeichnet, dass** die mindestens eine Polyacrylat-Polyurethan-Hybriddispersion des Wasserbasislacks identisch mit der Polyacrylat-Polyurethan-Hybriddispersion des Wasserklarlacks ist.

14. Verfahren zur Herstellung eines wasserbasierenden Zweischicht-Beschichtungssystems nach einem der Ansprüche 12 oder 13, **dadurch gekennzeichnet, dass** ein Wasserklarlack nach einem der Ansprüche 1 bis 6 mit einem Wasserbasislack nach einem der Ansprüche 7 bis 11 kombiniert wird.

15. Substrat, beschichtet mit einem wasserbasierenden Zweischicht-Beschichtungssystem nach einem der Ansprüche 12 oder 13.

## Claims

1. Aqueous clearcoat material for producing a waterborne urethane-based two-coat coating system, **characterized in that** it comprises
- at least one secondary polyacrylate dispersion having a polyacrylate glass transition temperature T_{g} ≥ 20°C and
- at least one hybrid polyacrylate-polyurethane dispersion
- with a weight ratio of the polyacrylate fraction of the secondary dispersion to the polyacrylate-polyurethane fraction of the hybrid dispersion of 1:1 to 4:1, preferably 2:1 to 3:1, more preferably 2.25:1 to 2.75:1, and
- as curing agent at least one low-viscosity aminosulfonic polyisocyanate.

2. Aqueous clearcoat material according to Claim 1, **characterized in that** the secondary polyacrylate dispersion has an OH fraction of 2.5% to 4.5% by weight, based on the solids fractions.

3. Aqueous clearcoat material according to Claim 1 or 2, **characterized in that** the secondary polyacrylate dispersion has a polyacrylate glass transition temperature T_{g} of 20 to 70°C.

4. Aqueous clearcoat material according to any one of Claims 1 to 3, **characterized in that** the secondary polyacrylate dispersion has a viscosity of 200 to 2500 mPas at 23°C.

5. Aqueous clearcoat material according to any one of the preceding claims, **characterized in that** the hybrid polyacrylate-polyurethane dispersion is preparable by
- initially introducing, in organic phase, a polyurethane precursor preparable by reacting at least one diisocyanate with at least one linear polyester and subsequently blocking the prepolymers with diethanolamine,
- in one or more stages, polymerizing (meth)acrylic acid and/or (meth)acrylate with vinylically unsaturated compounds in the presence of the polyurethane precursor, and
- carrying out neutralization and removing the process solvent.

6. Aqueous clearcoat material according to any one of the preceding claims, **characterized in that** it further comprises as curing agent a hydrophobic polyisocyanate of low viscosity.

7. Aqueous basecoat material for producing a waterborne two-coat coating system, **characterized in that** it comprises at least one polyurethane dispersion, at least one hybrid polyacrylate-polyurethane dispersion, and at least one melamine resin.

8. Aqueous basecoat material according to Claim 7, **characterized in that** the weight ratio of the polyurethane binder fraction of the at least one polyurethane dispersion to the hybrid polyacrylate-polyurethane binder fraction of the at least one hybrid polyacrylate-polyurethane dispersion of the aqueous basecoat material is 3:1 to 5.5:1, preferably 4:1 to 4.5:1.

9. Aqueous basecoat material according to Claim 7 or 8, **characterized in that** said at least one polyurethane dispersion is preparable from
- UV-stable di-and/or polyisocyanates,
- polyethers and/or polyesters having molar masses Mₙ of between 600 and 2000,
- and low molecular mass diols and/or ethanolamines.

10. Aqueous basecoat material according to any one of Claims 7 to 9, **characterized in that** the at least one hybrid polyacrylate-polyurethane dispersion is preparable by
- initially introducing, in organic phase, a polyurethane precursor preparable by reacting at least one diisocyanate with at least one linear polyester and subsequently blocking the prepolymers with diethanolamine,
- in one or more stages, polymerizing (meth)acrylic acid and/or (meth)acrylate with vinylically unsaturated compounds in the presence of the polyurethane precursor, and
- carrying out neutralization and removing the process solvent.

11. Aqueous basecoat material according to any one of Claims 7 to 10, **characterized in that** the weight ratio of the binder of the at least one melamine resin, based on the sum of the weight fractions of the binders of the at least one polyurethane dispersion and of the at least one hybrid polyacrylate-polyurethane dispersion, is between 1:2 and 1:8, preferably 1:3 to 1:4.

12. Waterborne urethane-based two-coat coating system comprising an aqueous clearcoat material according to any one of Claims 1 to 6 and an aqueous basecoat material according to any one of claims 7 to 11.

13. Waterborne two-coat coating system according to Claim 12, **characterized in that** the at least one hybrid polyacrylate-polyurethane dispersion of the aqueous basecoat material is identical with the hybrid polyacrylate-polyurethane dispersion of the aqueous clearcoat material.

14. Process for producing a waterborne two-coat coating system according to either of Claims 12 and 13, **characterized in that** an aqueous clearcoat material according to any one of Claims 1 to 6 is combined with an aqueous basecoat material according to any one of Claims 7 to 11.

15. Substrate coated with a waterborne two-coat coating system according to either of Claims 12 and 13.

## Revendications

1. Laque claire aqueuse pour la préparation d'un système de revêtement bicouche à base d'eau, à base d'uréthane, **caractérisée en ce qu'**elle comprend
- au moins une dispersion secondaire de polyacrylate présentant une température de transition vitreuse du polyacrylate T_{g} ≥ 20°C et
- au moins une dispersion hybride de polyacrylate-polyuréthane
- présentant un rapport pondéral de la proportion de polyacrylate de la dispersion secondaire à la proportion de polyacrylate-polyuréthane de la dispersion hybride de 1:1 à 4:1, de préférence de 2:1 à 3:1, de manière particulièrement préférée de 2,25:1 à 2,75:1 et,
- comme durcisseur, au moins un polyisocyanate acide aminosulfonique, de basse viscosité.

2. Laque claire aqueuse selon la revendication 1, **caractérisée en ce que** la dispersion secondaire de polyacrylate présente une proportion d'OH de 2,5 à 4,5 % en poids, par rapport aux proportions de solides.

3. Laque claire aqueuse selon la revendication 1 ou 2, **caractérisée en ce que** la dispersion secondaire de polyacrylate présente une température de transition vitreuse du polyacrylate T_{g} de 20 à 70°C.

4. Laque claire aqueuse selon l'une quelconque des revendications 1 à 3, **caractérisée en ce que** la dispersion secondaire de polyacrylate présente une viscosité de 200 à 2500 mPa.s à 23°C.

5. Laque claire aqueuse selon l'une quelconque des revendications précédentes, **caractérisée en ce que** la dispersion hybride de polyacrylate-polyuréthane peut être préparée par
- disposition au préalable d'un précurseur de polyuréthane, pouvant être préparé par transformation d'au moins un diisocyanate avec au moins un polyester linéaire et par blocage consécutif des prépolymères avec de la diéthanolamine, dans une phase organique,
- polymérisation en une ou plusieurs étapes d'acide (méth)acrylique et/ou de (méth)acrylate avec des composés vinyliquement insaturés en présence du précurseur de polyuréthane et
- neutralisation et élimination du solvant de procédé.

6. Laque claire aqueuse selon l'une quelconque des revendications précédentes, **caractérisée en ce qu'**elle comprend, comme durcisseur, en outre un polyisocyanate de basse viscosité, hydrophobe.

7. Laque de base, aqueuse, pour la préparation d'un système de revêtement bicouche à base d'eau, **caractérisée en ce qu'**elle comprend au moins une dispersion de polyuréthane, au moins une dispersion hybride de polyacrylate-polyuréthane et au moins une résine de mélamine.

8. Laque de base, aqueuse, selon la revendication 7, **caractérisée en ce que** le rapport pondéral de la proportion de liant de type polyuréthane de ladite au moins une dispersion de polyuréthane à la proportion de liant hybride de type polyacrylate-polyuréthane de ladite au moins une dispersion hybride de polyacrylate-polyuréthane de la laque de base, aqueuse, est de 3:1 à 5,5:1, de préférence de 4:1 à 4,5:1.

9. Laque de base, aqueuse, selon la revendication 7 ou 8, **caractérisée en ce que** ladite au moins une dispersion de polyuréthane peut être préparée à partir
- de diisocyanates ou de polyisocyanates stables aux UV,
- de polyéthers et/ou de polyesters présentant des masses molaires Mₙ entre 600 et 2000
- et de diols et/ou d'éthanolamines de bas poids moléculaire.

10. Laque de base, aqueuse, selon l'une quelconque des revendications 7 à 9, **caractérisée en ce que** ladite au moins une dispersion hybride de polyacrylate-polyuréthane peut être préparée par
- disposition au préalable d'un précurseur de polyuréthane, pouvant être préparé par transformation d'au moins un diisocyanate et d'au moins un polyester linéaire et par blocage consécutif des prépolymères avec de la diéthanolamine, dans une phase organique,
- polymérisation en une ou plusieurs étapes d'acide (méth)acrylique et/ou de (méth)acrylate avec des composés vinyliquement insaturés en présence du précurseur de polyuréthane et
- neutralisation et élimination du solvant de procédé.

11. Laque de base, aqueuse, selon l'une quelconque des revendications 7 à 10, **caractérisée en ce que** le rapport pondéral du liant de ladite au moins une résine de mélamine par rapport à la somme des proportions pondérales des liants de ladite au moins une dispersion de polyuréthane et de ladite au moins une dispersion hybride de polyacrylate-polyuréthane est situé entre 1:2 et 1:8, de préférence de 1:3 à 1:4.

12. Système de revêtement bicouche à base d'eau, à base d'uréthane, comprenant une laque claire aqueuse selon l'une quelconque des revendications 1 à 6 et une laque de base, aqueuse, selon l'une quelconque des revendications 7 à 11.

13. Système de revêtement bicouche, à base d'eau, selon la revendication 12, **caractérisé en ce que** ladite au moins une dispersion hybride de polyacrylate-polyuréthane de la laque de base, aqueuse, est identique à la dispersion hybride de polyacrylate-polyuréthane de la laque claire aqueuse.

14. Procédé pour la préparation d'un système de revêtement bicouche à base d'eau selon l'une quelconque des revendications 12 ou 13, **caractérisé en ce qu'**une laque claire aqueuse selon l'une quelconque des revendications 1 à 6 est combinée avec une laque de base, aqueuse, selon l'une quelconque des revendications 7 à 11.

15. Substrat, revêtu par un système de revêtement bicouche à base d'eau selon l'une quelconque des revendications 12 ou 13.
